(19) Europäisches Patentamt
European Patent Office
Office européen des brevets

(11) **EP 1 876 004 A1**

(12) **EUROPÄISCHE PATENTANMELDUNG**

(43) Veröffentlichungstag:
**09.01.2008 Patentblatt 2008/02**

(51) Int Cl.:
*B29C 45/14* (2006.01)    *B30B 13/00* (2006.01)

(21) Anmeldenummer: **07033504.7**

(22) Anmeldetag: **05.07.2007**

(84) Benannte Vertragsstaaten:
**AT BE BG CH CY CZ DE DK EE ES FI FR GB GR HU IE IS IT LI LT LU LV MC MT NL PL PT RO SE SI SK TR**
Benannte Erstreckungsstaaten:
**AL BA HR MK YU**

(30) Priorität: **06.07.2006  AT 11542006**

(71) Anmelder: **Stanzbiegetechnik Ges.M.B.H.**
**2752 Wöllersdorf (AT)**

(72) Erfinder: **Buxbaum, Peter, Ing.**
**2752 Wöllersdorf (AT)**

(74) Vertreter: **Babeluk, Michael**
**Patentanwalt**
**Mariahilfer Gürtel 39/17**
**1150 Wien (AT)**

(54) **Verfahren zur Herstellung von umspritzten Formteilen**

(57)    Die Erfindung betrifft ein Verfahren zur Herstellung von urnspritzten Formteilen, bei dem aus einem Band (16) Teile ausgestanzt werden und diese Teile in einem weiteren Arbeitsschritt mit Kunststoff umspritzt werden. Eine Vereinfachung bei gleichzeitiger Beschleunigung kann dadurch erreicht werden, dass das Band (16) durch einen Verbund aus mindestens einer Stanzeinrichtung (3a, 3b) und mindestens einer Spritzgießeinrichtung (4a, 4b) hindurchgeführt wird, dass das Band (16) abwechseln in einer ersten Gruppe von Arbeitstakten (S1, S2, S3, S4, S5, S6), einer ersten Anzahl von Stanzvorgängen unterworfen wird und in einer zweiten Gruppe von Arbeitstakten (G1, G2, G3, G4, G5, G6) einer zweiten Anzahl von Spritzgießvorgängen unterworfen wird, und dass die erste Anzahl (p) größer ist als die zweite Anzahl (q). Weiters betrifft die vorliegende Erfindung eine Vorrichtung zur Durchführung dieses Verfahrens.

Fig. 1

EP 1 876 004 A1

**Beschreibung**

Die Erfindung betrifft ein Verfahren zur Herstellung von umspritzten Formteilen, gemäß dem Oberbegriff von Patentanspruch 1.

Es ist bekannt, Formteile aus Metall aus einem Band auszustanzen, die mit Kunststoff umspritzt sind. Solche kunststoffumspritzten Formteile werden beispielseise für Elektro- und Elektronikkomponenten benötigt, bei denen der Metallteil als stromführendes Element oder als Träger dient, der Kunststoff dient zur Isolierung bzw. bildet den Körper des Steckers oder des Schaltelements.

Um solche kunststoffumspritzten Formteile herzustellen, sind verschiedene Verfahren bekannt geworden. Bei einer ersten Gruppe von Verfahren wird ein bandförmiges Ausgangsmaterial zunächst in einem Stanzautomaten vorgestanzt, um die für das umspritzen notwendige Geometrie bzw. die Pilotlöcher zu erhalten. Danach wird das Band auf eine Spule aufgespult, meist muss zusätzlich ein Zwischenlageband aus Papier oder Kunststoff mitgespult werden, um das Metallband vor Beschädigung zu schützen, das dann zwischengelagert wird. In einem zweiten zeitlich und räumlich getrennten Arbeitsschritt wird dieses Band in eine entsprechende Spritzgießeinrichtung eingelegt und dem Spritzgießvorgang unterworfen. Der Vorteil dieses Verfahrens besteht darin, dass durch die weitestgehende Entkoppelung des Stanzvorganges vom Spritzgießvorgang die jeweiligen Maschinen für sich optimiert werden können und unabhängig voneinander betrieben werden können. Nachteilig ist jedoch der erhöhte Manipulationsaufwand und die Fehleranfälligkeit, da die Manipulation des bereits gestanzten Bandes aufgrund der mechanischen Instabilität kritisch ist. Darüber hinaus werden eventuelle Fehler oder Toleranzüberschreitungen beim Stanzvorgang unter Umständen spät erkannt, so dass es zu einem hohen Prozentsatz von Ausschuss kommt. Bei dieser Technik spricht man vom "Reel-to-Reel" Verfahren.

Ein weiteres bekanntes Verfahren sieht vor, dass eine Stanzeinrichtung und eine Spritzgießeinrichtung in einer Produktionslinie hintereinander angeordnet sind. Die unterschiedlichen Produktionsgeschwindigkeiten der Stanzeinrichtung und der Spritzgießeinrichtung wird dabei über Pufferbereiche ausgeglichen, die beispielsweise als Form von Schlaufen ausgebildet sind, in denen das Band zwischen den einzelnen Arbeitsschritten geführt wird. Eine solche Produktionslinie benötigt viel Platz, der in vielen Fällen nicht zur Verfügung steht und ist schwierig handhabbar, da die Pufferkapazitäten naturgemäß begrenzt sind und es hier immer wieder zu entsprechenden Störungen kommt.

Weiters sind Vorrichtungen bekannt geworden, bei denen ein Stanzmodul direkt an eine Spritzgussmaschine angebaut ist. Solche Vorrichtungen sind sehr kompakt, haben jedoch aufgrund der stark unterschiedlichen Taktzeiten des Stanzvorganges und des Spritzgießvorganges eine sehr geringe Leistungsfähigkeit.

In der DE 43 20 524 C ist eine Spritzgießmaschine gezeigt, die in der Lage ist, in einem Arbeitstakt mehrere Stanzvorgänge und einen Spritzgießvorgang durchzuführen. Betroffen von diesen Vorgängen ist jeweils ein einziger Bauteil oder eine Bauteilgruppe aus einer jeweils gleichen Anzahl von Bauteilen. Die unterschiedlichen Stanzvorgänge betreffen dabei das Vorstanzen, bzw. Fertigstanzen, d.h. zeitlich aufeinander folgende Vorgänge, die am selben Bauteil durchgeführt werden. Eine Verringerung der Taktzeit kann auf diese weise nicht erreicht werden.

Aufgabe der vorliegenden Erfindung ist es, diese Nachteile zu vermeiden und ein Verfahren anzugeben, mit dem es möglich ist, kunststoffumspritzte Formteile mit hoher Effizienz herzustellen, wobei die Störungsanfälligkeit möglichst gering sein soll. Eine weitere Aufgabe der Erfindung ist es, eine Vorrichtung anzugeben, mit der ein solches Verfahren durchgeführt werden kann und die einfach aufgebaut und kompakt ist. Weiters soll die Vorrichtung modular aufgebaut und an verschiedene Einsatzbedingungen leicht anpassbar sein.

Erfindungsgemäß werden die obigen Aufgaben durch die Merkmale von Patentanspruch 1 gelöst.

Wie bei vielen herkömmlichen Stanzverfahren wird zunächst von einem strukturlosen Band ausgegangen, in das zunächst Öffnungen in regelmäßigen Abständen eingebracht werden, welche Öffnungen dazu vorgesehen sind, dass in weiterer Folge Pilotierstifte eingreifen, die eine hochgenaue Vorschubbewegung des Bandes ermöglichen. Danach werden an dem Band sämtliche Stanzvorgänge und sonstige Arbeitsvorgänge wie etwa im vorliegenden Fall Spritzgießvorgänge ausgeführt, um in einem allerletzten Schritt den Formteil zu vereinzeln. In der Folge konzentriert sich die Beschreibung auf die Stanzvorgänge und die Spritzgießvorgänge, da die übrigen Arbeitsschritte in herkömmlicher Weise erfolgen.

Das erfindungsgemäße Verfahren läuft dabei so ab, dass die Steuerungseinrichtung zunächst in einer ersten Gruppe von Arbeitstakten das Band Schritt für Schritt durch mindestens eine Stanzeinrichtung und mindestens eine Spritzgießeinrichtung hindurch bewegt. In jedem dieser Arbeitstakte wird ein Stanzvorgang durchgeführt. Falls mehrere Stanzeinrichtungen vorgesehen sind, können die Stanzvorgänge je nach den vorliegenden Randbedingungen gleichzeitig oder unter Umständen abwechselnd ausgeführt werden. Nachdem p Arbeitstakte der ersten Gruppe ausgeführt worden sind, wird die periodische Vorschubbewegung unterbrochen und es wird ein Spritzgießvorgang ausgeführt. Dabei werden gleichzeitig p Formteile umspritzt, so dass die wesentlich längere Taktzeit der Spritzgießeinrichtung gegenüber den Stanzeinrichtungen ausgeglichen wird. Je nach Bedarf ist es auch möglich, gleichzeitig oder nacheinander mehrere - beispielsweise q - Spritzgießvorgänge durchzuführen, um beispielsweise Mehrfachumspritzungen mit unterschiedlichen Kunststoffen realisieren zu können. Danach wird das Verfahren wieder mit der ersten Gruppe von Arbeitstakten fortgesetzt. Während der Ausführung des Spritzgießvorganges ist es möglich, einen einzelnen Stanzvorgang auszuführen, was jedoch insgesamt relativ bedeutungslos ist.

Besonders günstig ist es, wenn nach jeder ersten Gruppe von Arbeitstakten jeweils ein einzelner Spritzgießtakt ausgeführt wird, da es auf diese Weise möglich ist, die größte Effizienzsteigerung zu erzielen.

Eine besonders begünstigte Ausführungsvariante des erfindungsgemäßen Verfahrens sieht vor, dass die Gesamtdauer der ersten Gruppe von Arbeitstakten in der Stanzvorgänge durchgeführt werden, etwa gleich ist der Gesamtdauer der zweiten Gruppe von Arbeitstakten, in der Spritzgießvorgänge durchgeführt werden. Auf diese Weise wird erreicht, dass die für die Herstellung eines Formteils im Schnitt benötigten Zeit etwa doppelt so groß ist als die reine Taktzeit des Stanzvorganges. Es kann zwar der Durchsatz durch Vergrößerung der ersten Anzahl von Arbeitstakten noch gesteigert werden, wobei sich jedoch herausgestellt hat, dass dann der apparative Aufwand unverhältnismäßig stark ansteigt.

Beim erfindungsgemäßen Verfahren ist es von besonderem Vorteil, dass über eine Steuerungseinrichtung zwischen jedem Arbeitstakt der ersten Gruppe ein Vorschub des Bandes ausgelöst wird und dass der Vorschub für einen Arbeitstakt der zweiten Gruppe unterbrochen wird. Auf diese Weise wird ein einfaches und betriebssicheres Verfahren gewährleistet.

Ein besonders kompakter Aufbau der erfindungsgemäßen Vorrichtung ist möglich, wenn die Stanzvorgänge und die Spritzgießvorgänge unmittelbar nacheinander ausgeführt werden.

Weiters betrifft die Erfindung eine Vorrichtung zur Herstellung von umspritzten Formteilen mit einem Zufuhreinrichtung für ein in Form eines Bandes vorliegendes Ausgangsmaterial mindestens einer Stanzeinrichtung zur Herstellung einer vorbestimmten Geometrie des Formteils und mit mindestens einer Spritzgießeinrichtung, um den Formteil mit Kunststoff zu umspritzen, sowie mit einer Steuerungseinrichtung zur Steuerung der Zufuhreinrichtung der Stanzeinrichtung und der Spritzgießeinrichtung.

Erfindungsgemäß ist vorgesehen, dass die Steuerungseinrichtung und die Spritzgießeinrichtung mechanisch miteinander gekoppelt sind und dass die Steuerungseinrichtung dazu ausgebildet ist, die Stanzeinrichtung und die Spritzgießeinrichtung abwechselnd zu betätigen, wobei die Anzahl der aufeinanderfolgenden Betätigungen der Stanzeinrichtung größer ist als die der Spritzgießeinrichtung.

Wesentlich an der erfindungsgemäßen Vorrichtung ist es, dass zwischen den Stanzeinrichtungen und den Spritzgießeinrichtungen keine Pufferbereiche oder dergleichen vorgesehen sind, so dass ein kompakter Aufbau erreichbar ist und gleichzeitig eine hohe Betriebsicherheit erzielt wird. Aufgrund der Tatsache, dass immer eine größere Anzahl von Stanzvorgängen durchgeführt wird und in einem Spritzgießvorgang die in der Zwischenzeit produzierten Formteile bearbeitet werden, kann gleichzeitig eine hohe Durchsatzrate erzielt werden. Weiters wesentlich ist auch, dass eine Gruppierung von Bauteilen stattfindet, die für die Stanzvorgänge und für die Spritzgießvorgänge unterschiedlich ist, um optimierte Bearbeitungszeiten zu erreichen.

Eine mechanisch besonders robuste und einfache Ausführung ergibt sich dadurch, dass die Stanzeinrichtung und die Spritzgießeinrichtung auf einem gemeinsamen Maschinensockel unmittelbar nebeneinander angeordnet sind.

Als betriebsmäßig besonders günstig hat es sich herausgestellt, wenn die Spritzgießeinrichtung als n-fach Werkzeug ausgebildet ist, und dass n zwischen 6 und 20, vorzugsweise zwischen 10 und 16 beträgt. Auf diese Weise wird ein idealer Kompromiss zwischen apparativem Aufwand und Leistungsfähigkeit der Anlage erzielt.

Von besonderem Vorteil ist es, wenn die Zufuhreinrichtung so ausgebildet ist, dass das Band linear durch die Stanzeinrichtung und die Spritzgießeinrichtung bewegbar ist. Auf diese Weise können Fehlerquellen weitestgehend vermieden werden.

Je nach den Anforderungen an die Formteile ist es in bevorzugter Weise möglich, dass mehrere Spritzgießeinrichtungen zur Ausführung unterschiedlicher Umspritzvorgänge vorgesehen sind.

Weiters ist es technisch begünstigt, wenn die Stanzeinrichtung und die Spritzgießeinrichtung jeweils über separate Servomotoren betätigbar sind.

Von besonderem Vorteil ist es, wenn die Spritzgießeinrichtung über zwei bewegliche Formhälften verfügt. Dadurch kann unabhängig von der Komplexität des Bauteils die Entformung durchgeführt werden, ohne das Band bewegen zu müssen. Durch den Entfall einer vertikalen Bewegung des Bandes kann erhebliche Vereinfachung errecht werden,

In der Folge wird die vorliegende Erfindung anhand der in den Figuren dargestellten Ausführungsbeispiele näher erläutert. Es zeigen:

Fig. 1    eine erfindungsgemäße Vorrichtung in einer seitlichen Ansicht;

Fig. 2    einen Ausschnitt aus einem Band mit erfindungsgemäß hergestellten Formteilen;

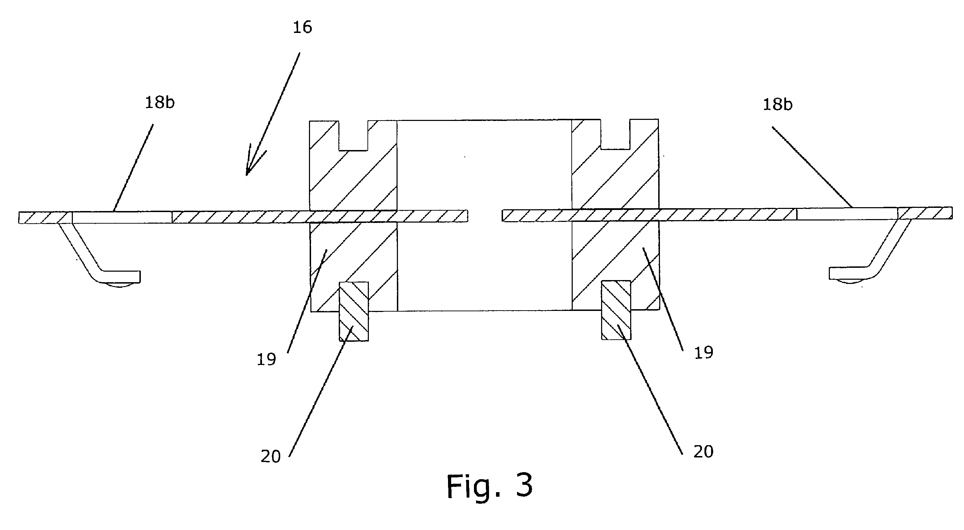

Fig. 3    einen Schnitt nach Linie III-III in Fig. 2;

Fig. 4     schematisch eine Spritzgießeinrichtung;

Fig. 5     und Fig. 6 eine weitere Ausführungsvariante einer Spritzgießeinrichtung im Schnitt bzw. in einer seitlichen Darstellung; und

Fig. 7     ein Diagramm zur Erklärung des erfindungsgemäßen Verfahrens.

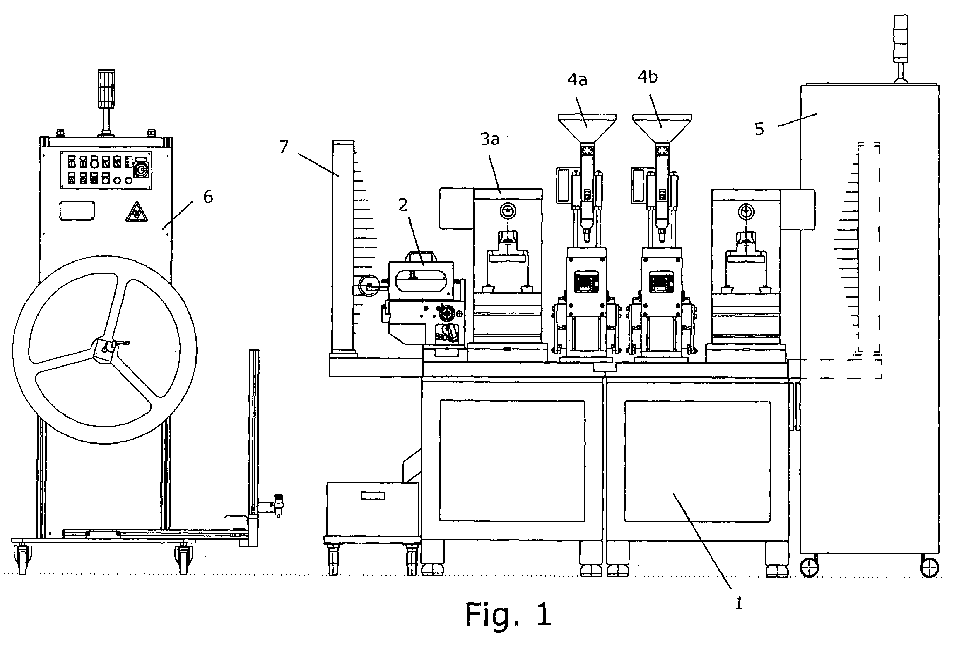

Die Vorrichtung von Fig. 1 besteht aus einem Maschinensockel 1 mit einer Zufuhreinrichtung 2 zur Förderung eines hier nicht dargestellten Bandes einer ersten Stanzeinrichtung 3a, einer zweiten Stanzeinrichtung 3b und einer ersten und einer zweiten Spritzgießeinrichtung 4a, 4b. Der Vorschub des Bandes kann schiebend oder ziehend sein. Der Antrieb erfolgt über einen hier nicht ersichtlichen Servomotor, die internen Bewegungen sind kurvengesteuert. Eine Steuerungseinrichtung ist schematisch mit 5 angedeutet. Die Bedienung der Anlage erfolgt über einen hier nicht ersichtlichen 15 Zoll Touch-Screen Bildschirm. Eine Bandhaspel 6 dient zu Abwickeln des Rohbandes, das mit der Vorrichtung 1 bearbeitet wird. Sicherungseinrichtungen 7 zur Erzeugung von Lichtvorhängen dienen zur Unfallverhütung.

Die Stanzeinrichtungen 3a, 3b werden über Servomotoren und Nockenantriebe von unten geschlossen. Sie werden ebenso wie die Spritzgießeinrichtungen 4a, 4b über die Steuerungseinrichtung 5 angesteuert.

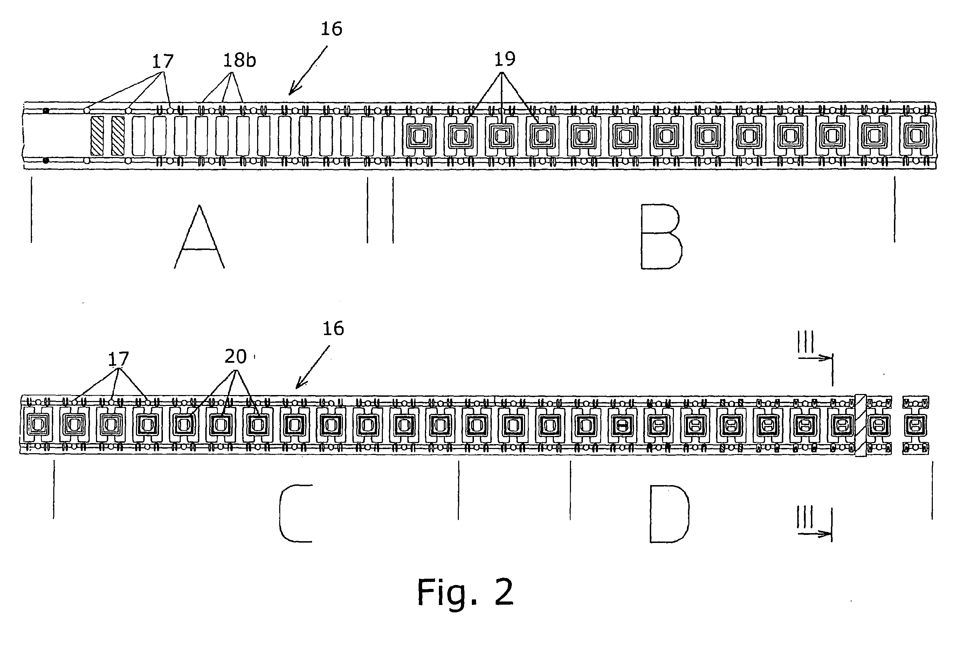

In Fig. 2 ist ein Abschnitt eines Bandes 16 in den verschiedenen Stadien bei Durchführung des erfindungsgemäßen Verfahrens dargestellt. Der Abschnitt A stellt das Band 16 in der ersten Stanzeinrichtung 3a dar, die Abschnitte B und C stellen das Band 16 in der ersten bzw. zweiten Spritzgießeinrichtung 4a bzw. 4b dar und in Abschnitt D ist das Band 16 in der zweiten Stanzeinrichtung 3b gezeigt.

Mit 17 sind in Abschnitt A hergestellte Öffnungen bezeichnet, in die nicht dargestellten Pilotierstifte eingreifen, um einen exakten Vorschub des Bandes 16 während der Arbeitsvorgänge zu gewährleisten. Ausstanzungen 18a, 18b dienen dazu, die erforderliche Geometrie der Formteile, die im Anschluss daran vereinzelt werden, herzustellen. Mit 19 werden Kunststoffrahmen bezeichnet, die durch Umspritzen auf die Formteile in Abschnitt B in einem Zwölffach-Werkzeug aufgebracht worden sind. Ebenfalls in einem Zwölffach-Werkzeug werden im Abschnitt C Dichtungen 20 hergestellt. Das fertig Stanzen, Biegen, Prägen und Trennen erfolgt in Abschnitt D.

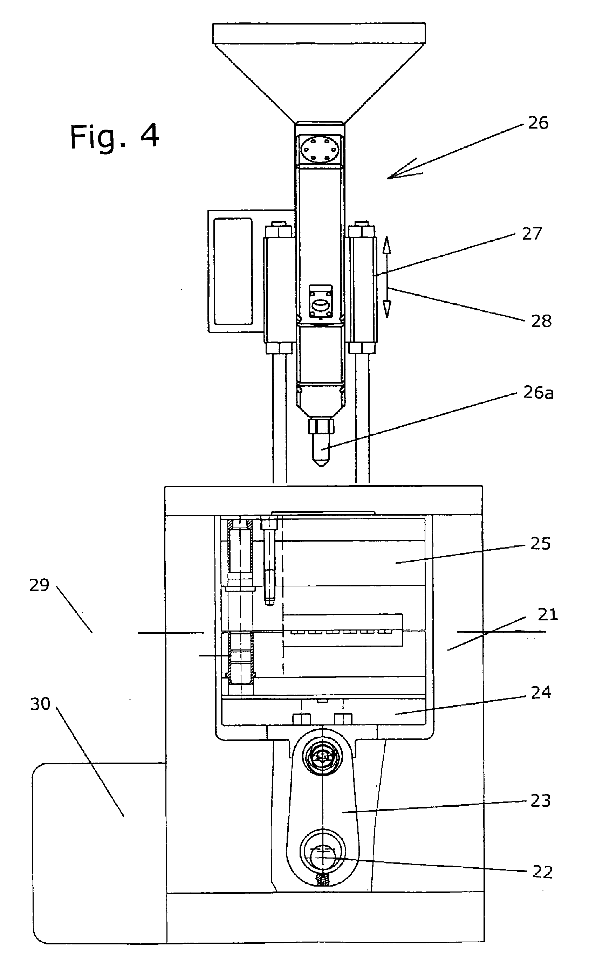

Der grundsätzliche Aufbau einer Spritzgießeinrichtung ist in Fig. 4 dargestellt. Die Spritzgießeinrichtung von Fig. 4 besteht aus einem Rahmen 21, in dem ein Exzenter 22 über ein Pleuel 23 eine untere Formhälfte 24 bewegt. Eine obere Formhälfte 25 ist fest im Rahmen 21 befestigt. Ein Spritzaggregat 26 mit einer Spritzdüse 26a dient zum Einspritzen von Kunststoff in die Formhälften 24, 25 und ist für Servicezwecke in Richtung des Doppelpfeils 28 auf einem Schlitten 27 beweglich gelagert. Mit 29 ist die Trennebene bezeichnet, die gleichzeitig die Ebene darstellt, in der das hier nicht dargestellte Band abläuft. Zumindest bei komplexeren Geometrien muss zur Entformung das Band aus der Trennebene 29 nach unten bewegt werden. Der Servoantrieb ist schematisch mit 30 angedeutet.

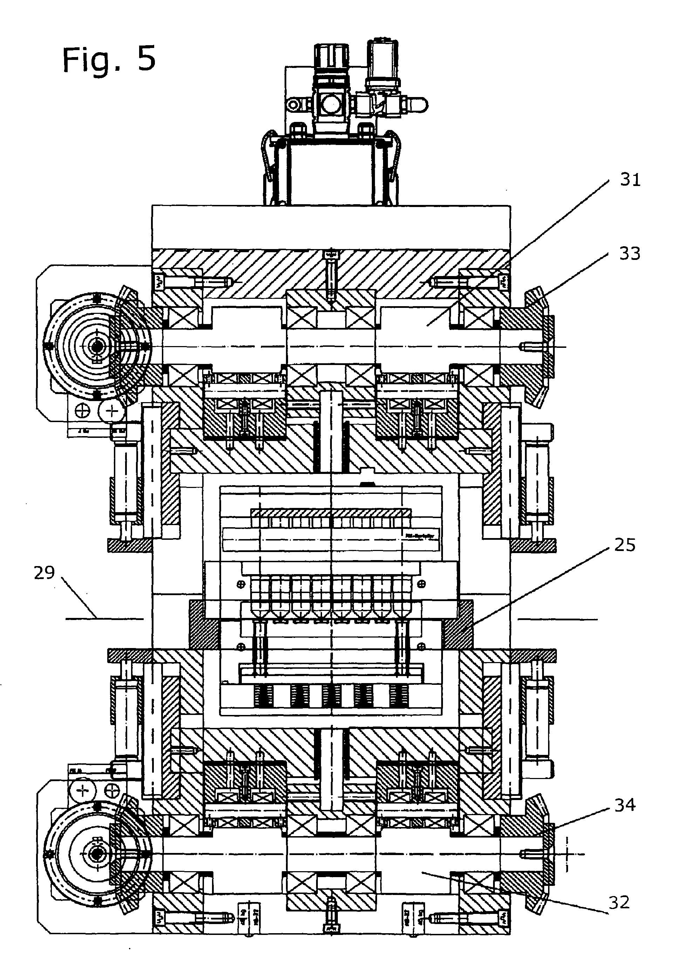

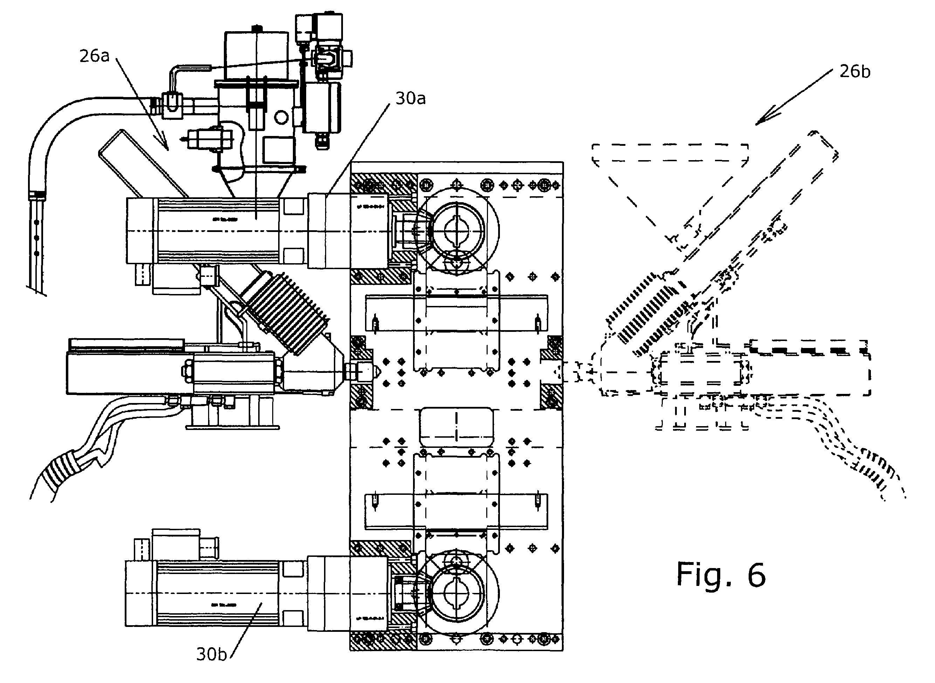

Die Fig. 5 und Fig. 6 zeigen eine bevorzugte Ausführungsvariante einer Spritzgießeinrichtung. Bei dieser Ausführungsvariante sind zwei Exzenterwellen 31, 32 übereinander im Rahmen 21 angeordnet. Die erste Exzenterwelle 31 bewegt die obere Formhälfte 25 in senkrechter Richtung, während die zweite Exzenterwelle 32 die untere Formhälfte 24 antreibt. Auch hier ist die Trennebene mit 29 bezeichnet. Die Exzenterwellen 31, 32 werden durch Kegelräder 33, 34 über Servoantriebe 30a, 30b angetrieben. Der besondere Vorteil dieser Ausführungsvariante liegt darin, dass das hier nicht dargestellte Band bei der Entformung nicht aus der Trennebene 29 bewegt werden muss, wodurch Beschädigungen und Verformungen vermieden werden können. Ein weiterer besonderer Vorteil besteht darin, dass zwei Spritzaggregate 26a, 26b vorgesehen sein können, so dass auch Teile hergestellt werden können, die aus unterschiedlichen Kunststoffen zusammengesetzt sind.

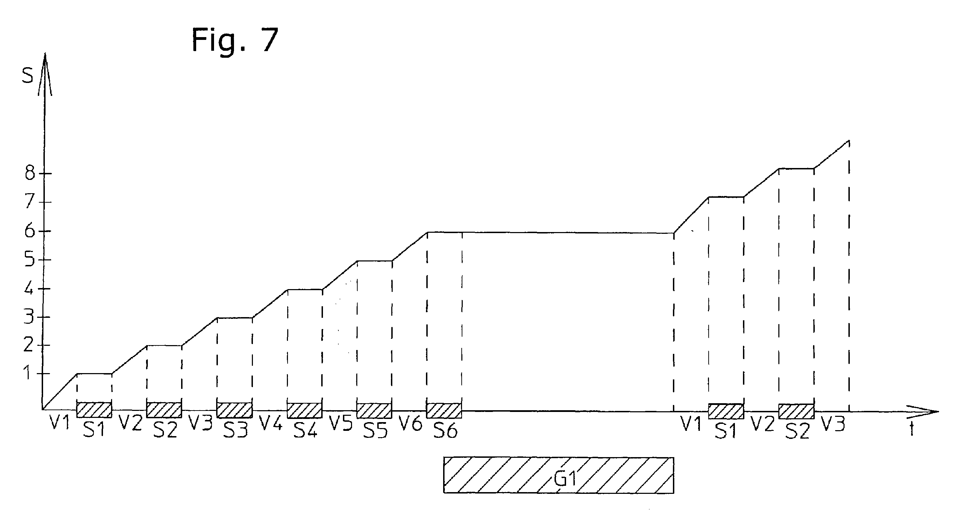

Aus Fig. 7 ist der zeitliche Ablauf des erfindungsgemäßen Verfahrens ersichtlich. Auf der horizontalen Achse ist die Zeit t aufgetragen, während auf der vertikalen Achse der Vorschubweg s ersichtlich ist. In den Vorschubphasen V1, V2, V3, V4, V5, V6 wird das Band 16 jeweils um eine vorbestimmte Wegstrecke s weiter bewegt, die im Wesentlichen der Abmessung eines einzelnen Formteils entspricht. Zwischen den einzelnen Vorschubschritten V1, V2, V3, V4, V5, V6, bzw. nach dem letzten Vorschubschritt V6 wird jeweils ein Stanzvorgang durchgeführt, der in Fig. 4 mit S1, S2, 53, S4, S5, S6 bezeichnet ist. Typischerweise beträgt die Gesamtdauer eines Stanzvorganges S1,..., S6 einschließlich des davor stattfindenden Vorschubs V1,..., V6 etwa 300 ms. Nach dem letzten Vorschub V6 findet ein Spritzgießvorgang G1 statt, der typischerweise eine Zykluszeit von etwa 4000 ms aufweist. Wie aus Fig. 4 ersichtlich kann der Spritzgießvorgang G1 zeitlich teilweise oder vollständig mit dem letzten Stanzvorgang G6 überlappen. Während des Spritzgießvorganges G1 findet keine Vorschubbewegung statt. Nach dem Spritzgießvorgang G1 finden weiteren Vorschubtakte V7, V8, bzw. Stanzvorgänge S7, S8 in der gleichen Weise wie zuvor beschrieben statt.

In Fig. 7 sind zur Verdeutlichung der Darstellung pro Spritzgießvorgang G1 nur sechs Stanzvorgänge S1,..., S6 beschrieben. Bei Verwendung eines 12-fach Werkzeuges für den Spritzgießvorgang G1 kann eine Abfolge von zwölf aufeinanderfolgenden Stanzvorgängen stattfinden. Die Gesamtzykluszeit T bei Verwendung eines 12-fach Werkzeuges liegt typischerweise bei:

$$T = 12 \times 300 \text{ ms} + 4000 \text{ ms} = 7600 \text{ ms},$$

was etwa 95 Teilen pro Minute entspricht. Damit wird eine erhebliche Beschleunigung gegenüber herkömmlichen kombinierten Werkzeugen erreicht.

In einem solchen Fall werden also p = 12 Stanzvorgänge und q = 1 Spritzgießvorgänge abwechselnd durchgeführt. Die Werte von p und q können variieren, wesentlich ist jedoch, dass p stets größer ist als q. Als besonders vorteilhaft hat es sich herausgestellt, das Verhältnis p / q etwa gleich groß zu wählen wie das Verhältnis der Zykluszeiten eines Spritzgießvorgangs und eines Stanzvorgangs.

Mit der vorliegenden Erfindung ist es möglich, auf einfache und zuverlässige Weise eine hohe Produktivität zu erreichen.

**Patentansprüche**

1. Verfahren zur Herstellung von umspritzten Formteilen, bei dem aus einem Band (16) Teile ausgestanzt werden und diese Teile in einem weiteren Arbeitsschritt mit Kunststoff umspritzt werden, wobei das Band (16) durch einen Verbund aus mindestens einer Stanzeinrichtung (3a, 3b) und mindestens einer Spritzgießeinrichtung (4a, 4b) hindurchgeführt wird, **dadurch gekennzeichnet, dass** das Band (16) abwechselnd in einer ersten Gruppe von Arbeitstakten (S1, S2, S3, S4, S5, S6) einer ersten Anzahl (p) von Stanzvorgängen unterworfen wird und nach jedem Arbeitstakt eine Vorschubbewegung stattfindet, und in einer zweiten Gruppe von Arbeitstakten (G1, G2, G3, G4, G5, G6) einer zweiten Anzahl (q) von Spritzgießvorgängen unterworfen wird, und dass die erste Anzahl (p) größer ist als die zweite Anzahl (q), wobei die in mehreren Arbeitstakten (S1, S2, S3, S4, S5, S6) gestanzten Bauteile zumindest teilweise gleichzeitig den Spritzgießvorgängen unterworfen wird.

2. Verfahren nach Anspruch 1, **dadurch gekennzeichnet, dass** zwischen zwei aufeinander folgenden Gruppen von Stanzvorgängen ein einziger Spritzgießvorgang durchgeführt wird.

3. Verfahren nach Anspruch 1 oder 2, **dadurch gekennzeichnet, dass** die Gesamtdauer der ersten Gruppe von Arbeitstakten (S1, S2, S3, 54, S5, S6), in der Stanzvorgänge durchgeführt werden, etwa gleich ist der Gesamtdauer der zweiten Gruppe von Arbeitstakten (G1, G2, G3, G4, G5, G6), in der Spritzgießvorgänge durchgeführt werden.

4. Verfahren nach einem der Ansprüche 1 bis 3, **dadurch gekennzeichnet, dass** über eine Steuerungseinrichtung (5) zwischen jedem Arbeitstakt der ersten Gruppe (S1, S2, 53, S4, S5, S6) ein Vorschub des Bandes (16) ausgelöst wird und dass der Vorschub für einen Arbeitstakt der zweiten Gruppe (G1, G2, G3, G4, G5, G6) unterbrochen wird.

5. Verfahren nach einem der Ansprüche 1 bis 4, **dadurch gekennzeichnet, dass** die Stanzvorgänge und die Spritzgießvorgänge unmittelbar nacheinander ausgeführt werden.

6. Verfahren nach einem der Ansprüche 1 bis 5, **dadurch gekennzeichnet, dass** das Band (16) in horizontaler Lage durch die Stanzeinrichtung (3a, 3b) und durch die Spritzgießeinrichtung (4a, 4b) hindurchgeführt wird.

7. Vorrichtung zur Herstellung von umspritzten Formteilen nach einem Verfahren der Ansprüche 1 bis 6, mit einem Zufuhreinrichtung für ein in Form eines Bandes (16) vorliegendes Ausgangsmaterial mindestens einer Stanzeinrichtung (3a, 3b) zur Herstellung einer vorbestimmten Geometrie des Formteils und mit mindestens einer Spritzgießeinrichtung (4a, 4b), um den Formteil mit Kunststoff zu umspritzen, sowie mit einer Steuerungseinrichtung (5) zur Steuerung der Zufuhreinrichtung der Stanzeinrichtung (3a, 3b) und der Spritzgießeinrichtung (4a, 4b), **dadurch gekennzeichnet, dass** die Stanzeinrichtung (3a, 3b) austauschbar ausgeführt ist.

8. Vorrichtung nach Anspruch 7, **dadurch gekennzeichnet, dass** die Steuerungseinrichtung (5) dazu ausgebildet ist, die Stanzeinrichtung (3a, 3b) und die Spritzgießeinrichtung (4a, 4b) abwechselnd zu betätigen, wobei die Anzahl der aufeinanderfolgenden Betätigungen der Stanzeinrichtung (3a, 3b) größer ist als die der Spritzgießeinrichtung (4a, 4b).

9. Vorrichtung nach Anspruch 7 oder 8, **dadurch gekennzeichnet, dass** die Stanzeinrichtung (3a, 3b) und die Spritzgießeinrichtung (4a, 4b) auf einem gemeinsamen Maschinensockel (1) unmittelbar nebeneinander angeordnet sind und dass die Zufuhreinrichtung vorzugsweise so ausgebildet ist, dass das Band (16) linear durch die Stanzeinrichtung (3a, 3b) und die Spritzgießeinrichtung (4a, 4b) bewegbar ist.

**10.** Vorrichtung nach einem der Ansprüche 7 bis 9, **dadurch gekennzeichnet, dass** die Spritzgießeinrichtung (4a, 4b) als n-fach Werkzeug ausgebildet ist, und dass n zwischen 6 und 24, vorzugsweise zwischen 10 und 20 beträgt.

**11.** Vorrichtung nach einem der Ansprüche 7 bis 10, **dadurch gekennzeichnet, dass** die Stanzeinrichtung (3a, 3b) eine Schließeinrichtung aufweist, die von Servomotoren betätigt wird und dass die Stanzeinrichtung (3a, 3b) und die Spritzgießeinrichtung (4a, 4b) vorzugsweise jeweils über separate Servomotoren betätigbar sind.

**12.** Vorrichtung nach einem der Ansprüche 7 bis 11, **dadurch gekennzeichnet, dass** die Spritzgießeinrichtung (4a, 4b) über zwei bewegliche Formhälften (24, 25) verfügt, wobei die Formhälften (24, 25) vorzugsweise jeweils durch einen Servoantrieb (30a, 30b) angetrieben sind.

4a    4b

5

7

3a

2

6

EP 1 876 004 A1

7

Fig. 1

1

Fig. 2

Fig. 3

Fig. 4

# Fig. 5

Fig. 6

Fig. 7

EP 1 876 004 A1

**EP 1 876 004 A1**

| | Europäisches Patentamt | **EUROPÄISCHER RECHERCHENBERICHT** | Nummer der Anmeldung |
|---|---|---|---|
| | | | EP 07 03 3504 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | JP 10 323857 A (INST TECH PRECISION ELECT) 8. Dezember 1998 (1998-12-08) * Zusammenfassung * * Absatz [0016] - Absatz [0019] * ----- | 1-6 | INV. B29C45/14 ADD. B30B13/00 |
| X | US 5 940 954 A (SATO TOSHIOMI [JP]) 24. August 1999 (1999-08-24) * Spalte 11, Zeile 1 - Spalte 12, Zeile 42; Abbildung 35 * ----- | 1-6 | |
| D,X | DE 43 20 524 A1 (WEIDMUELLER INTERFACE [DE]) 22. Dezember 1994 (1994-12-22) | 1-6 | |
| Y | * Spalte 3, Zeile 8 - Spalte 4, Zeile 1 * * Spalte 5, Zeile 38 - Zeile 39 * ----- | 1-6 | |
| Y | US 4 445 736 A (HOPKINS JOHN R [US]) 1. Mai 1984 (1984-05-01) * Spalte 2, Zeile 19 - Zeile 52 * ----- | 1-6 | |

| | | | RECHERCHIERTE SACHGEBIETE (IPC) |
|---|---|---|---|
| | | | B29C |

~~Der vorliegende Recherchenbericht wurde für alle Patentan~~sprüche erstellt

| Recherchenort | Abschlußdatum der Recherche | Prüfer |
|---|---|---|
| Den Haag | 23. Juli 2007 | Zattoni, Federico |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**Europäisches**
**Patentamt**

Nummer der Anmeldung

EP 07 03 3504

## GEBÜHRENPFLICHTIGE PATENTANSPRÜCHE

Die vorliegende europäische Patentanmeldung enthielt bei ihrer Einreichung mehr als zehn Patentansprüche.

☐ Nur ein Teil der Anspruchsgebühren wurde innerhalb der vorgeschriebenen Frist entrichtet. Der vorliegende europäische Recherchenbericht wurde für die ersten zehn sowie für jene Patentansprüche erstellt, für die Anspruchsgebühren entrichtet wurden, nämlich Patentansprüche:

☐ Keine der Anspruchsgebühren wurde innerhalb der vorgeschriebenen Frist entrichtet. Der vorliegende europäische Recherchenbericht wurde für die ersten zehn Patentansprüche erstellt.

## MANGELNDE EINHEITLICHKEIT DER ERFINDUNG

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

Siehe Ergänzungsblatt B

☐ Alle weiteren Recherchengebühren wurden innerhalb der gesetzten Frist entrichtet. Der vorliegende europäische Recherchenbericht wurde für alle Patentansprüche erstellt.

☐ Da für alle recherchierbaren Ansprüche die Recherche ohne einen Arbeitsaufwand durchgeführt werden konnte, der eine zusätzliche Recherchengebühr gerechtfertigt hätte, hat die Recherchenabteilung nicht zur Zahlung einer solchen Gebühr aufgefordert.

☐ Nur ein Teil der weiteren Recherchengebühren wurde innerhalb der gesetzten Frist entrichtet. Der vorliegende europäische Recherchenbericht wurde für die Teile der Anmeldung erstellt, die sich auf Erfindungen beziehen, für die Recherchengebühren entrichtet worden sind, nämlich Patentansprüche:

☒ Keine der weiteren Recherchengebühren wurde innerhalb der gesetzten Frist entrichtet. Der vorliegende europäische Recherchenbericht wurde für die Teile der Anmeldung erstellt, die sich auf die zuerst in den Patentansprüchen erwähnte Erfindung beziehen, nämlich Patentansprüche:

1 - 6

**Europäisches**
**Patentamt**

**MANGELNDE EINHEITLICHKEIT**
**DER ERFINDUNG**
**ERGÄNZUNGSBLATT B**

Nummer der Anmeldung

EP 07 03 3504

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

```
1. Ansprüche: 1-6

      Verfahren zur Herstellung von umspritzten Formteilen
                             ---


2. Ansprüche: 7-12

      Vorrichtung zur Herstellung von umspritzten Formteilen mit
      austauschbarer Stanzeinrichtung
                             ---
```

**ANHANG ZUM EUROPÄISCHEN RECHERCHENBERICHT
ÜBER DIE EUROPÄISCHE PATENTANMELDUNG NR.**

EP 07 03 3504

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

23-07-2007

| Im Recherchenbericht angeführtes Patentdokument | | Datum der Veröffentlichung | Mitglied(er) der Patentfamilie | | Datum der Veröffentlichung |
|---|---|---|---|---|---|
| JP 10323857 | A | 08-12-1998 | JP | 3838456 B2 | 25-10-2006 |
| US 5940954 | A | 24-08-1999 | JP<br>JP | 3137889 B2<br>9141751 A | 26-02-2001<br>03-06-1997 |
| DE 4320524 | A1 | 22-12-1994 | KEINE | | |
| US 4445736 | A | 01-05-1984 | KEINE | | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4320524 C